# EUROPEAN PATENT APPLICATION

(11) **EP 3 885 764 A1**
(43) Date of publication of application: **29.09.2021**
(21) Application number: 19887306.9
(22) Date of filing: 20.11.2019
(51) Int. Cl.: G01N 30/24, G01N 30/26, G01N 30/46, G01N 30/54, G01N 30/72

(54) **ANALYSIS DEVICE HAVING PLURALITY OF CHROMATOGRAPHS AND CONTROL METHOD FOR ANALYSIS DEVICE**

(30) Priority: 20.11.2018 JP 2018217175
(71) Applicant: Hitachi High-Tech Corporation, Minato-ku Tokyo 105-6409 (JP)
(72) Inventor: OGATA Izumi, Tokyo 105-6409 (JP); SUGIME Takayuki, Tokyo 105-6409 (JP); NOGAMI Makoto, Tokyo 105-6409 (JP); AKIEDA Daisuke, Tokyo 105-6409 (JP)
(74) Representative: MERH-IP Matias Erny Reichl Hoffmann Patentanwälte PartG mbB
(86) International application number: PCT/JP2019/045363
(87) International publication number: WO 2020/105661

(57) **Abstract**

An analysis apparatus having a plurality of chromatographs is provided capable of achieving suppression of a reduction in throughput even when a separation column needs to be replaced at the end of its lifespan. When estimating that a column used in a liquid chromatograph 107 reaches the end of its lifespan, a control unit calculates back time from the estimated time so that another liquid chromatograph 117 is ready for measurement at a timing when the liquid chromatograph 107 becomes unusable for the measurement. Then, the control unit starts the preparation operation of the liquid chromatograph 117. After the completion of the preparation operation, the liquid chromatograph 117 performs initialization, equilibration, standard sample injection, elution, and washing processes of a preliminary new column. The control unit evaluates the normality of the new column in the liquid chromatograph 117 immediately after the column of the liquid chromatograph 107 reaches the end of its lifespan, and then causes the liquid chromatographs 102, 112, and 117 to perform continuous analysis.

## Description

### Technical Field

The present invention relates to an analysis apparatus including a plurality of chromatographs and its control method.

### Background Art

A liquid chromatograph is an apparatus in which, when a liquid feed pump injects a mixed sample solution containing measurement target components into a separation column to which a solvent is continuously fed, the components in the sample interact with a filler and the solvent in the separation column with each other according to chemical properties and, making use of a character of achieving detection differently time-wise depending on the difference in mutual interaction of each component, the liquid chromatograph identifies the component.

According to the purpose of the analysis and the sample, a photometer, a mass spectrometer, etc. are suitably chosen as the detector of the liquid chromatograph.

Generally, the liquid feed pump performs gradient elution in which the liquid feed pump feeds solvents to the separation column, changing the mixture ratio of a plurality of different solvents. In the gradient elution, first, the liquid feed pump feeds the solvent to the separation column with a composition of low sample elution power. Therefore, most of the components in the mixed sample solution injected into the separation column adsorb to the separation column.

Next, the pump gradually changes the mixture ratio of the solvent to be fed to a composition of a higher elution power. Therefore, each of the components in the sample adsorbed to the separation column gradually leaves one by one the separation column, and is sequentially eluted into the detector in order. After the measurement target components are detected, the liquid feed pump changes the mixture ratio of the solvent to a composition of the highest elution power in order to wash out the components which do not leave the separation column easily.

Thus, in the gradient elution, the solvent composition in the separation column changes in one analysis.

When performing a continuous analysis in the gradient elution, since a next analysis is started after completion of a preceding analysis, equilibration is necessary for returning the solvent in the separation column to an initial concentration state. That is, in the gradient elution of the liquid chromatograph, processes of equilibration, elution, and washing are required for each measurement. Time for a detector to acquire an analysis result among these processes is only time for the elution process and time for a measuring target component to be eluted in the elution process, and the detector is in a standby state of an analysis during the processes of equilibration and washing.

Since the standby time exists, in the continuous analysis of the liquid chromatograph, there has been a problem of a throughput which is the number of analysis samples per unit time being low.

As a means for enhancing an increase in throughput of the liquid chromatograph, there is known a multi-stream liquid chromatograph system. This is an apparatus in which a plurality of liquid chromatographs provided in parallel share a single detector, and each liquid chromatograph performs equilibration, elution, and washing processes in a shifted manner to continuously elude the measurement target components to the detector.

As one example of the above system, a multi-column chromatograph apparatus disclosed in Patent Literature 1 is given.

### Citation List

### Patent Literature

Patent Literature 1: JP 4372419

### Summary of Invention

### Technical Problem

The separation column of the liquid chromatograph is an article of consumption. In general, after the predetermined number of times of continuous analyses or when it is determined bases on the life judgment threshold that the pressure or performance of a separation column has run out, the separation column has to be replaced even in the middle of the continuous analysis. Usually, when starting to use a new separation column, there is required initialization in which a liquid is fed through the inside of the separation column for a predetermined time or measurement of a standard sample to check that the separation column is in a normal state.

In the multi-stream liquid chromatograph system for improving throughput during the continuous analysis also, when a separation column is judged to have reached the end of its lifespan, the separation column has to be replaced even in the middle of the continuous analysis.

Therefore, in the multi-stream liquid chromatograph system, because of the process required for replacing the separation column during the analysis, a stream where exchange of the separation column occurs becomes tentatively unusable for the analysis, which has caused a reduction in throughput.

An object of the present invention is to provide an analysis apparatus having a plurality of chromatograph separation units and its control method capable of achieving suppression of a reduction in throughput even when a separation column needs to be replaced at the end of its lifespan.

### Solution to Problem

In order to achieve the above object, the present invention is configured as follows.

In an analysis apparatus including: a plurality of chromatograph separation units each having a liquid feeding portion for feeding a sample to an analysis flow path, a sample injection portion for injecting a sample into the analysis flow path, a separation column containing a filler that interacts with a sample component, and a column thermostat for stabilizing the separation column; a detector to which the plurality of chromatograph separation units are connected in parallel; a flow path switching portion for selectively introducing a measurement target component eluted from the plurality of chromatograph separation units to the detector; and a control unit for controlling the plurality of chromatograph separation units, the detector, and the flow path switching portion, the plurality of chromatograph separation units include at least one chromatograph separation unit in a standby state.

Also, in a control method for an analysis apparatus including: a plurality of chromatograph separation units each having a liquid feeding portion for feeding a sample to an analysis flow path, a sample injection portion for injecting a sample into the analysis flow path, a separation column containing a filler that interacts with a sample component, and a column thermostat for stabilizing the separation column; a detector to which the plurality of chromatograph units are connected in parallel; a flow path switching portion for selectively introducing a measurement target component eluted from the plurality of chromatograph separation units to the detector; and a control unit for controlling the plurality of chromatograph separation units, the detector, and the flow path switching portion, at least one of the plurality of chromatograph separation units is allowed to be in a state of stopping temperature control of the liquid feeding portion and the column thermostat and to be in a standby state of having a separation column that is usable. Further, the control unit estimates that a separation column included in a chromatograph separation unit other than the chromatograph separation unit in the standby state among the plurality of chromatograph separation units reaches its end of a lifespan and, then, in accordance with a timing when the separation column reaches the end of its lifespan, allows the chromatograph separation unit in the standby state to be in a usable state.

### Advantageous Effects of Invention

According to the present invention, in an analysis apparatus having a plurality of chromatograph separation units, it becomes possible to realize the analysis apparatus having a plurality of chromatograph separation units and its control method capable of achieving suppression of a reduction in throughput even when a separation column needs to be replaced at the end of its lifespan. Brief Description of Drawings

FIG. 1 is a schematic configuration diagram of a multi-stream liquid chromatograph system according to an embodiment of the present invention;
FIG. 2 is a graph showing examples of gradient programs for eluting samples by a liquid chromatograph in the embodiment;
FIG. 3 is an explanatory diagram of the process of each stream when the multi-stream liquid chromatograph system performs a continuous measurement in the embodiment;
FIG. 4 is a diagram for explaining an example of a column exchange process performed when there is no preliminary stream in the multi-stream liquid chromatograph system, which is an example different from the present invention; and
FIG. 5 is a diagram for explaining an example of a column exchange process performed when there is a preliminary stream in an embodiment.

### Description of Embodiments

Hereinafter, embodiments of the present invention will be described with reference to the drawings.

It should be noted that the application of the present invention is not limited to the examples described below, and it can be applied within the scope of the technical concept.

Although the configuration of the mass spectrometer as a detector of the multi-stream liquid chromatograph system is described herein, the present invention can be applied to other detectors, such as visible/ultraviolet absorbance detectors, photodiode array detectors, and fluorescence detectors.

Also, in the embodiment of the present invention, there is one separation column in each stream. However, the present invention is applicable even when the number of separation columns is one or any larger number.

Moreover, although the liquid chromatograph is used in the embodiment, examples of the present invention are also applicable to a gas chromatograph.

### Description of Embodiment

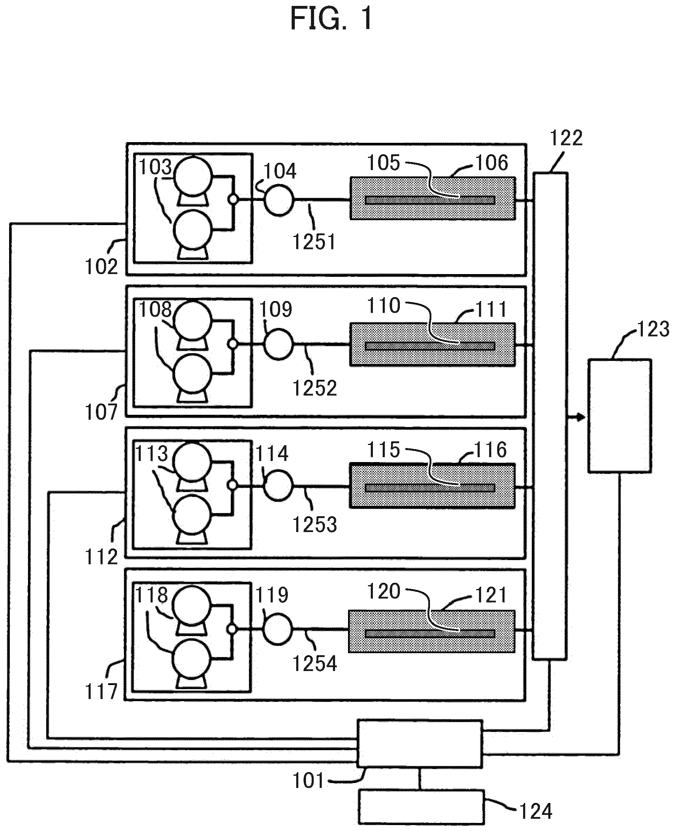

Fig. 1 is a schematic configuration diagram of a multi-stream liquid chromatograph system according to an embodiment of the present invention.

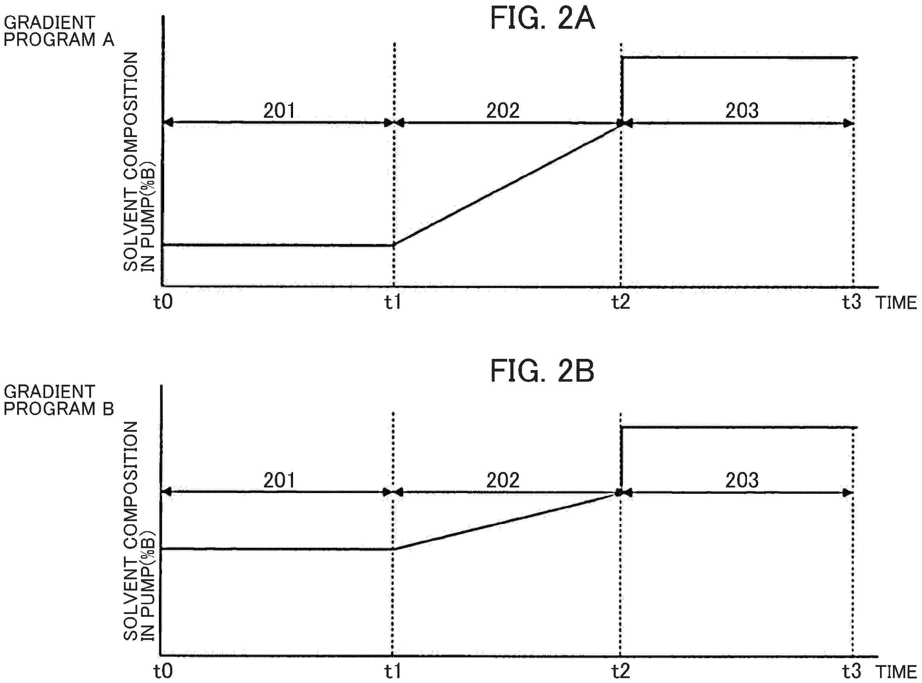

Also, Figs. 2A and 2B are graphs showing examples of gradient programs for eluting samples by a liquid chromatograph in the embodiment.

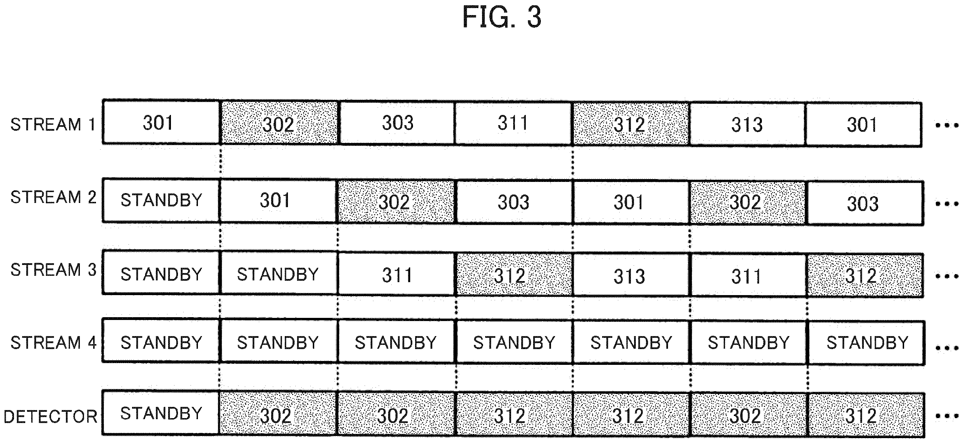

Further, Fig. 3 is an explanatory diagram of the process of each stream when the multi-stream liquid chromatograph system performs a continuous measurement in the embodiment.

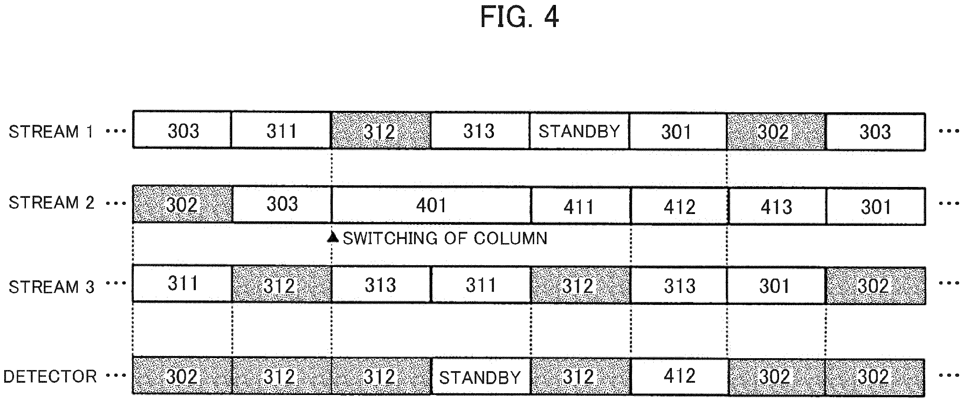

Still further, Fig. 4 is a diagram for explaining an example of a column exchange process performed when there is no preliminary stream in the multi-stream liquid chromatograph system, which is an example different from the present invention.

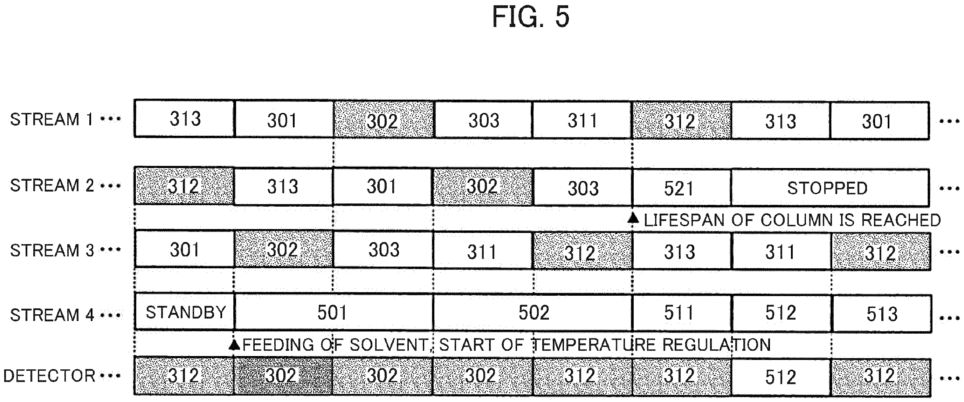

Still further, Fig. 5 is a diagram for explaining an example of a column exchange process performed when there is a preliminary stream in an embodiment.

In Fig. 1, the multi-stream liquid chromatograph system includes a plurality of liquid chromatograph separation units 102, 107, 112, and 117. The liquid chromatograph 117 can be defined as streams 1, 2, 3, and 4.

The liquid chromatograph separation unit 102 includes a liquid feed pump (liquid feed portion (feeding portion)) 103 for feeding solvents to an analysis flow path 1251 while changing concentration ratios of the plurality of different solvents, a sample injection valve (sample injection portion) 104 to introduce a sample into the analysis flow path 1251, a separation column 105, and a column thermostat 106 for stabilizing the performance of the separation column 105.

The liquid chromatograph separation unit 107 also has the same configuration as that of the liquid chromatograph separation unit 102. It has a liquid feed pump (liquid feeding portion (feeding portion)) 108 for feeding solvents to an analysis flow path 1252 while changing concentration ratios of the plurality of different solvents, a sample injection valve (sample injection portion) 109 to introduce a sample into the analysis flow path 1252, a separation column 110, and a column thermostat 111 for stabilizing the performance of the separation column 105.

The liquid chromatograph separation unit 112 also has the same configuration as that of the liquid chromatograph separation units 102 and 107. It has a liquid feed pump (liquid feeding portion (feeding portion)) 113 for feeding solvents to an analysis flow path 1253 while changing concentration ratios of the plurality of different solvents, a sample injection valve (sample injection portion) 114 to introduce a sample to the analysis flow path 1253, the separation column 115, and the column thermostat 116.

The liquid chromatograph separation unit 117 also has the same configuration as that of the liquid chromatograph separation units 102, 107, and 112. It has a liquid feed pump (liquid feeding portion (feeding portion)) 118 for feeding solvents to an analysis flow path 1254 while changing concentration ratios of the plurality of different solvents, a sample injection valve (sample injection portion) 119 to introduce a sample into the analysis flow path 1254, the separation column 120, and the column thermostat 121.

The liquid chromatograph separation units 102, 107, 112, and 117 are connected in parallel, with one another, to a single mass spectrometer (detector) 123 through a flow path switching valve (flow path switching portion) 122.

The control unit 101 controls operations of the liquid chromatograph separation units 102, 107, 112, and 117, the flow path switching valve 122, and the mass spectrometer 123.

A display unit 124 is connected to the control unit 101.

Figs. 2A and 2B show two examples (an example of program A in Fig. 2A and an example of program B in Fig. 2B) of gradient programs for eluting samples by a liquid chromatograph in the present embodiment.

The gradient programs A and B are used for analysis of different measurement target components in Figs. 2A and 2B. Either of the gradient programs roughly includes three processes of "column equilibration" 201, "measurement target component elution" 202, and "column washing" 203. In Fig. 2A and 2B, the vertical axis represents solvent composition of the pump, and the horizontal axis represents time.

First, the liquid feed pumps 103, 108, 113, and 118 perform equilibration to cause the inside of the column to be in an initial state with a solvent mixture ratio of low sample elution power (column equilibration 201). Within a sufficient time (t1) for the column equilibration 201, the sample injection valves 104, 109, 114, and 119 inject sample solution into a flow path in the liquid chromatographs 102, 107, and 112 and 117.

When the sample solution is injected, the liquid feed pumps 103, 108, 113, and 118 feed the solution while gradually changing the composition of a mixed solution so that the measurement target component may be separated from components in other samples. The measurement target component is eluted and detected with the mass spectrometer 123 which is a detector.

When the elution 202 of the measurement target components are completed (t2), the liquid feed pumps 103, 108, 113, and 118 change solvent composition of the mixed solution into the mixture ratio with strong elution power, and wash out other impurities adsorbed to the separation columns 105, 110, 115, and 120 (column washing 203).

Within a sufficient time (t3) for washing the inside of the separation columns 105, 110, 115, and 120, one analysis is completed. In order to perform a continuous analysis, this process is repeated.

As shown in the gradient programs A and B, the solvent mixture ratio of each process differs according to a measurement target component. However, in the continuous analysis, the column equilibration 201 prevents the analysis condition from affecting the next analysis.

Moreover, the column washing 203 prevents impurities in the sample solution from affecting the next analysis.

Here, in order that the detector 123 may detect a measurement component between the processes of these gradient programs A and B, the measurement target component elution 202 is operated.

In the multi-stream liquid chromatograph system shown in Fig. 1, the control unit 101 adjusts sample injection timing such that measurement target component elution (measurement target component elution process) 202 operated by the detector 123 do not overlap among streams 1 to 4 of the liquid chromatograph separation units 102, 107, 12, and 117.

Fig. 3 shows one example of the processes of each stream and the detector 123 when the multi-stream liquid chromatograph of Fig. 1 performs, at random, a continuous analyze of measurement samples to be measured in the gradient program A or B shown in Figs. 2A and 2B.

Usually, during the analysis, among the streams 1 to 4 of the four liquid chromatograph separation units 102, 107, 112, and 117 included in the multi-stream liquid chromatograph system of Fig. 1, for example, three streams 1, 2, and 3 of the streams 102, 107, and 112 are continuously operated, in order, to perform analysis.

First, the control unit 101 shown in Fig. 1 schedules measurement of a first sample for the first stream (stream 1) according to gradient program information required for measurement of the first sample. The first stream starts an equilibration process 301 of the gradient program A. When the equilibration process 301 of the first stream is completed, the sample injection valve (sample injecting portion) 104 of the first stream inject the first sample and starts an elution process 302 of the gradient program A.

The measurement target sample component is eluted at this time from the column 105 and is detected with the detector 123 being a mass spectrometer via the flow path switching valve 122. At this time, the control unit 101 schedules measurement of a second sample for the second stream (stream 2) according to required gradient program information, and the second stream starts an equilibration process 301 of the gradient program A.

Next, the first stream advances to the washing process 303 of the gradient program A. At the same time, a sample injection valve (sample injection portion) 109 of the second stream injects the second sample. The second stream starts the elution process 302 of the gradient program A, and a measurement target component is detected from the column 110 of the second stream via the flow path switching valve 122 with the detector 123. Furthermore, the control unit 101 schedules measurement of a third sample for the third stream (stream 3) according to required gradient program information, and the third stream starts an equilibration process 311 of the gradient program B.

Next, the control unit 101 schedules measurement of a fourth sample for the first stream having completed the measurement according to necessary gradient information, and the first stream starts an equilibration process 311 of the gradient program B. At the same time, the second stream performs the washing process 303 of the gradient program A.

The third stream starts an elution process 312 of the gradient program B, and a measuring target component from a column 115 of the third stream is detected with the detector 123 via the flow path switching valve 122.

Hereafter, the first stream performs measurement by the gradient program B, the second stream performs measurement by the gradient program A, and the third stream performs measurement by the gradient programs B.

At this time, the detector 123 detects, in order, the measurement target components eluted by respective streams when performing the elution process 302 or 312 and continuously obtains data.

One remaining stream 4 that is not being operated is a preliminary stream which will be operated when an exchange of the separation column to be described later is required. This preliminary stream 4 is in a standby state during a usual analysis, and in order to prevent degradation of the separation column 120, the preliminary stream 4 is caused to standby in a state where the liquid feed pump 118 is stopped and temperature control of the thermostat 121 is suspended, or in a room temperature or the temperature for column preservation (a state where the stream can usually be used). That is, the liquid chromatograph separation unit 117 being a preliminary stream 4 is a chromatograph separation unit in a standby state, and is so configured as to have the separation column 120 in a state where it can be usually used.

Fig. 4 shows an example of a column exchange process performed when there is no preliminary stream in the multi-stream liquid chromatograph system, which is an example different from the present invention.

When the control unit 101 estimates that the number of times of use of the separation column 110 being used by the second stream (stream 2) reaches the end of its lifespan while performing continuous analysis, scheduling of measuring the next sample is not given to the second stream. After the washing process 303 of the analysis in which the separation column 110 of the second stream reaches the end of its lifespan is completed, the separation column 110 is replaced with a new separation column. At this time, as preparation processes for replacing the column with a new one, there may be processes such as replacing a solvent in the used column with an appropriate solvent to be discarded, suspending the liquid feed pump 108 to release pressure of the liquid remaining in the used column, and changing the temperature of the column into a temperature safe enough for a user to touch when removing the used separation column.

Moreover, there are methods of replacing the separation column such as suspending the liquid feed pump 108 temporarily to detach and attach separation columns by a user or a system, switching the flow path to a preliminary column connected in advance with use of a switching valve, etc.

After replacing the separation column 110 of the second stream with a new column, the liquid feed pump 108 of the second stream performs processing such as the initialization 401 in which a solvent of specific solvent composition is fed through the inside of the new column and, to check that performance of the new column is normal, measurement of specific standard samples which includes equilibration 411, elution 412, and washing 413.

Because the second stream cannot analyze a measurement sample during each of the column exchange processes 401, 411, 412, and 413, the control unit 101 schedules the measurement of samples only for the first stream and the third stream. In this case, since the second stream 107 cannot be operated, the number of operated streams decreases.

Therefore, in the example of Fig. 4, standby time occurs in the first stream, which causes a reduction in throughput as compared to the case of a usual continuous analysis shown in Fig. 3.

As an embodiment of the present invention, Fig. 5 shows an example of a column exchange process performed when there is a preliminary stream.

During the performance of the continuous analysis shown in Fig. 3, when estimating that the column 110 used in the second stream (stream 2) reaches the end of its lifespan, the control unit 101 calculates back time from the estimated time so that a fourth stream (stream 4) being a preliminary stream is ready for measurement at a timing when the second stream becomes unusable for the measurement. Then, the control unit 101 starts a preparation operation to cause the liquid feed pump 118 of the fourth stream (stream 4) to start feeding liquid and the column thermostat 121 to start adjusting temperature.

The preparation operation 501 includes, for example, a flow path purge at the time of starting the liquid feeding, stabilization of the liquid feeding, and the temperature stabilization of the column thermostat 121.

When the preparation operation 501 is completed, the fourth stream (stream 4) performs an initialization 502 of a new preliminary column 120.

When the initialization 502 has been completed, the control unit 101 performs equilibration 511 for evaluating the normality of the separation column 120 of the fourth stream (stream 4). After completion of the equilibration 511, the control unit 101 injects a standard sample via the sample injection valve (sample injection portion) 119 of the fourth stream (stream 4), and the fourth stream (stream 4) starts an elution process 512 of the standard sample.

The standard sample is eluted from the separation column 120, and is detected with the detector 123 via the flow path switching valve 122. The fourth stream (stream 4) performs the washing process 513 of the separation column 120 after detection of the standard sample by the detector 123.

The control unit 101 schedules a preparation operation 501 and an initialization 502 before the separation column 110 of the second stream (stream 2) reaching the end of its lifespan and while the first, second, and third streams (streams 1, 2, and 3) are performing continuous analysis. By this process, evaluation of the normality of a new separation column 120 of the fourth stream (stream 4) being a preliminary stream is performed immediately after the separation column 110 of the second stream (stream 2) has reached the end of its lifespan. Hereafter, a continuous analysis by the first, third, and fourth streams (streams 1, 3, and 4) becomes possible.

Thus, even when the separation column needs to be replaced during the continuous analysis, a reduction in throughput can be suppressed.

The control unit 101 causes a display unit 124 to show which liquid chromatograph separation unit is the one whose separation column has reached the end of its lifespan. Moreover, a preparation operation of a preliminary stream is started, and the control section 101 allows the display unit 124 to show a current state.

By allowing the display unit 124 to show the contents, it becomes possible for an operator to recognize the necessity and timing to change a separation column.

Further, in regard to the second stream, when the washing process 303 immediately before the separation column 110 reaching the end of its lifespan has been completed, the control unit 101 applies post processing 521 to the used separation column 110 as required. The post processing 521 includes a process to replace the solvent in the used separation column 110 with an appropriate solvent when being discarded.

As described above, according to the embodiment of the present invention, the analysis apparatus having the plurality of liquid chromatograph separation units is provided with a preliminary stream which stays in a standby state until a separation column of another liquid chromatograph separation unit reaches the end of its lifespan. When estimating that the number of times of use of the separation column in a liquid chromatograph separation unit other than the chromatograph separation unit in the standby state reaches a predetermined value, the control unit adjusts timings of a preparation operation, initialization, equilibration, standard sample elution, and washing of the liquid chromatograph separation unit being a preliminary stream in accordance with a timing when the separation column reaches the end of its lifespan and causes the liquid chromatograph separation unit to be usable.

Therefore, even when a separation column having reached the end of its lifespan needs to be replaced, the analysis can be performed continuously. Thus, it becomes possible to realize an analysis apparatus having a plurality of chromatograph separation units capable of suppressing a reduction in throughput and its control method.

Further, in place of a preliminary (standby) liquid chromatograph separation unit, the liquid chromatograph separation unit whose separation column having reached the end of its lifespan is replaced with a new separation column can be allowed to be a new preliminary liquid chromatograph separation unit.

Alternatively, the liquid chromatograph separation unit whose separation column having reached the end of its lifespan and being replaced with a new separation column can be regarded as a liquid chromatograph separation unit to be usually used again and the liquid chromatograph having been a preliminary one originally can be regarded as a preliminary chromatograph separation unit again.

Also, what is described above is an example of the preliminary liquid chromatograph separation unit being one. However, it may be modified to correspond to several kinds of solvents and a plurality of preliminary liquid chromatograph separation units can be provided.

### List of Reference Signs

101···Control unit, 102, 107, 112, 117···Liquid chromatograph separation unit, 103, 108, 113, 118···Liquid feed pump, 104, 109, 114, 119···Sample injection valve (sample injection portion), 105, 110, 115, 120---Separation column, 106, 111, 116, 121---Column thermostat, 122---Flow path switching valve, 123···Mass spectrometer (detector), 124---Display unit, 201···Column equilibration, 202···Measurement target component elution process, 203···Column washing, 301···Equilibration process, 302---Elution process, 303···Washing process, 311···Equilibration process, 312···Elution process, 313···Washing process, 401, 502···Initialization process of new column product, 411,511···Equilibration process, 412, 512···Elution process, 413, 513···Washing process, 501···Preparation operation of preliminary stream, 521--- Post-treatment process, 1251, 1252, 1253, 1254---Analysis flow path

## Claims

1. An analysis apparatus having a plurality of chromatograph separation units, comprising: the plurality of chromatograph separation units, each of the chromatograph separation units including a liquid feeding portion for feeding a mobile phase to an analysis flow path, a sample injection portion for injecting a sample into the analysis flow path, a separation column containing a filler that interacts with a sample component, and a column thermostat for stabilizing the separation column; a detector to which the plurality of chromatograph separation units are connected in parallel; a flow path switching portion for selectively introducing a measurement target component eluted from the plurality of chromatograph separation units to the detector; and a control unit for controlling the plurality of chromatograph separation units, the detector, and the flow path switching portion,
wherein the plurality of chromatograph separation units include at least one chromatograph separation unit in a standby state.

2. The analysis apparatus having the plurality of chromatograph separation units according to claim 1,
wherein the chromatograph separation unit in the standby state includes a separation column that is normally usable.

3. The analysis apparatus having the plurality of chromatograph separation units according to claim 2,
wherein the chromatograph separation unit in the standby state is on standby in a state of stopping temperature control of the liquid feeding portion and the column thermostat.

4. The analysis apparatus having the plurality of chromatograph separation units according to claim 3,
wherein the control unit estimates that a separation column included in a chromatograph separation unit other than the chromatograph separation unit in the standby state among the plurality of the chromatograph separation units reaches an end of a lifespan thereof, and then adjusts timings of a preparation operation, initialization, equilibration, standard sample elution, and washing of the chromatograph separation unit in the standby state in accordance with a timing when the separation column reaches the end of the lifespan thereof.

5. The analysis apparatus having the plurality of chromatograph separation units according to any one of claims 1, 2, 3, and 4,
wherein the plurality of chromatograph separation units are liquid chromatographs, and the detector is a mass spectrometer.

6. A method of controlling an analysis apparatus having a plurality of chromatograph separation units, the analysis apparatus comprising: the plurality of chromatograph separation units, each of the chromatograph separation units including a liquid feeding portion for feeding a mobile phase to an analysis flow path, a sample injection portion for injecting a sample into the analysis flow path, a separation column containing a filler that interacts with a sample component, and a column thermostat for stabilizing the separation column; a detector to which the plurality of chromatograph separation units are connected in parallel; a flow path switching portion for selectively introducing a measurement target component eluted from the plurality of chromatograph separation units to the detector; and a control unit for controlling the plurality of chromatograph separation units, the detector, and the flow path switching portion, the method comprising the steps of:
bringing at least one of the plurality of chromatograph separation units into a standby state while having a separation column thereof normally usable, in a state of stopping temperature control of the liquid feeding portion and the column thermostat;
estimating that a separation column included in a chromatograph separation unit other than the chromatograph separation unit in the standby state among the plurality of the chromatograph separation units reaches an end of a lifespan thereof; and
bringing the chromatograph separation unit in the standby state, into a usable state in accordance with a timing when the estimated separation column reaches the end of the lifespan.

7. The method of controlling an analysis apparatus having a plurality of chromatograph separation units according to claim 6, the method further comprising a step of:
adjusting timings of a preparation operation, initialization, equilibration, standard sample elution, and washing of the chromatograph separation unit in the standby state in accordance with the timing when the separation column reaches the end of the lifespan.

8. The method of controlling an analysis apparatus having a plurality of chromatograph separation units according to claim 6 or 7,
wherein the plurality of chromatograph separation units are liquid chromatographs, and the detector is a mass spectrometer.
